# EUROPEAN PATENT APPLICATION

(11) **EP 1 493 761 A1**
(43) Date of publication of application: **05.01.2005**
(21) Application number: 03101974.8
(22) Date of filing: 02.07.2003
(51) Int. Cl.: C08F 220/24, C08L 27/00, C08F 259/08, C08L 51/00, D06M 15/00, C08F 2/00

(54) **Fluoropolymer of fluorinated short chain acrylates or methacrylates and oil- and water repellent compositions based thereon**

(71) Applicant: 3M Innovative Properties Company, St. Paul, Minnesota 55144-1000 (US)
(72) Inventor: Audenaert, Frans, Hermeslaan 7 1831 Diegem (BE); van der Elst, Pierre J., Hermeslaan 7 1831 Diegem (BE); Rolly, Dominique G., Hermeslaan 7 1831 Diegem (BE)
(74) Representative: Voortmans, Gilbert J.L.

(57) **Abstract**

The present invention relates to compositions based on a fluoropolymer comprising repeating units derived from (i) one or more fluorinated monomers selected from the group consisting of monomers according to the general formula:

R_{f}-X-OC(O)-C(R)=CH₂

wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers. The fluoropolymer has a weight average molecular weight between 3000 and 55000. The compositions may be solvent born or aqueous born and are particularly useful to provide good oil- and/or water repellency properties to the substrate.

## Description

### 1. Field of the invention.

The present invention relates to fluoropolymers of fluorinated short chain alkyl acrylates and/or methacrylates. In particular, the present invention relates to compositions comprising such fluoropolymer and to treatment of substrates such as textile with such fluoropolymer to provide repellency properties to the substrate.

### 2. Background of the invention

Compositions for making substrates, in particular fibrous substrates, such as textile, oil- and water repellent have been long known in the art. Fluorochemical compounds have been well known as being highly effective in providing oil and water repellency to substrates and in particular textile substrates. The commercially available fluorochemical compositions can be applied at low levels and are generally effective in providing the desired oil and water repellency properties at these low levels. Such a high efficiency is desired not only because of the cost of fluorochemical compounds but also to assure that the treated substrate retains its characteristics such that disturbing the look and feel thereof is minimized as much as possible. Because of the desired efficiency, the fluorochemical compositions that are generally employed are typically based on compounds that have fluorinated long chain alkyl groups, typically having 8 or more carbon atoms or are based on polymers derived from monomers having fluorinated long chain alkyl groups.

For example, polymers derived from fluorinated alkyl esters of acrylic or methacrylic acid have been described in US 3,660,360, US 5,284,902, US 4,742,140, US 6,121,372 and US 6,126,849. According to the teachings of these patents, the fluorinated alkyl esters of acrylic or methacrylic acid can be copolymerized with various comonomers including hydrocarbon monomers such as alkylacrylate or chlorine containing monomers such as vinyl chloride and vinylidene chloride. It is shown in these teachings that beneficial repellency properties can be obtained with these polymers but typically, these properties are achieved with polymers that are derived from fluorinated alkyl esters of acrylic or methacrylic acid that have 8 or more carbons in the (per)fluorinated alkyl part of the fluorinated monomer.

EP 1 225 187 and EP 1 225 188 describe various fluorochemical oligomers for the treatment of substrates such as glass and ceramics. In order to obtain durable repellent coatings on these substrates, the fluorochemical oligomers comprise a substantial amount of silyl groups bearing hydrolysable groups such that the fluorochemical oligomer can react with the surface of the substrate.

From an environmental aspect, it would now be desirable to avoid the use of compounds that have fluorinated long chain alkyl groups. Even if such compounds are polymerized into a macromolecule which is then used in the fluorochemical composition, it has been found difficult to exclude residual low molecular weight compounds that have fluorinated long chain alkyl groups. Since the latter compounds have recently been environmentally objected to, even when present in very minor amounts, it would be desirable to avoid their use completely.

It is further known that in fluoropolymers derived from fluorinated alkylacrylates, with decreasing chain length of the perfluoroalkyl group in the acrylate monomer, the receding dynamic water contact angle decreases and the surface energy increases, thus indicating a lower repellency performance of fluoropolymers based on such short chain fluorinated alkylacrylates. This is for example taught in a publication of 1995 titled "Surface characteristics of fluoroalkyl acrylate copolymers and their applications" by Motonobu Kubo, Surface (Hyoumen), Vol. 33, p 185 and in a publication of F. Audenaert et al. in The Journal of the Textile Institute, Vol. 90, pp. 76-94 of 1999.

It would now be desirable to find an alternative treatment for rendering substrates, in particular textile substrates, water and/or oil repellent substantially or completely avoiding the use of fluorinated compounds that are environmentally objected to. Desirably, the compositions are cost-effective, can be easily produced and have a good stability in a variety of solvents or water based systems. In particular there is a desire to provide fluorochemical compositions that can preferably be applied from a hydrocarbon or chlorinated solvent and are compatible with dry cleaning of textile such that the application of the composition can be carried out during or at the end of dry cleaning in a dry cleaning apparatus. It is a further desire to provide fluorochemical compositions that can be applied from an environmentally friendly solvent, such as isopropyl alcohol and that does not require heat-curing after treatment. Such compositions can fmd utility in aftermarket applications, i.e. applications where a consumer applies the composition to a substrate such as textile by e.g. spraying the composition on the substrate. There is a further desire for a fluorochemical composition that can be applied from aqueous medium, provide good oil and dynamic water repellency to textile substrates such that textile substrates can be provided that fmd utility in apparel or rain and outerwear articles. Desirably, the treatment is highly effective and can achieve comparable or better performance as the hereto used fluorochemical compositions.

### 3. Brief description of the invention

In one aspect, the invention relates to a fluoropolymer comprising repeating units derived from (i) one or more fluorinated monomers selected from the group consisting of monomers according to the general formula:

R_{f}-X-OC(O)-C(R)=CH₂

wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers, said fluoropolymer being free of silyl groups and said fluoropolymer having a weight average molecular weight between 3000 and 55000, with the proviso that when said fluoropolymer comprises between 3 and 75 mole % of repeating units derived from a chlorine containing comonomer selected from the group consisting of vinylidene chloride, vinyl chloride and mixtures thereof, the fluoropolymer has a weight average molecular weight of at least 6000.

In a further aspect, the invention relates to a method of making the aforementioned fluoropolymer.

In a third aspect, the invention relates to a fluoropolymer composition comprising a solution in an organic solvent of a fluoropolymer comprising units derived from (i) one or more fluorinated monomers selected from the group consisting of monomers according to the general formula:

R_{f}-X-OC(O)-C(R)=CH₂

wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers and wherein said fluoropolymer has a weight average molecular weight between 3000 and 55000, and wherein the organic solvent comprises at least one solvent selected from the group consisting of hydrocarbon solvents, chlorinated solvents and alcohols.

In a fourth aspect, the invention relates to a fluoropolymer composition comprising an aqueous emulsion or dispersion of a fluoropolymer comprising units derived from (i) one or more fluorinated monomers selected from the group consisting of monomers according to the general formula:

R_{f}-X-OC(O)-C(R)=CH₂

wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers and wherein said fluoropolymer has a weight average molecular weight between 10000 and 55000.

In yet a further aspect, the invention pertains to a method of treatment of a substrate, in particular a fibrous substrate, with an aforementioned composition, to render the substrate water and/or oil repellent.

It has been found that the fluoropolymer and fluoropolymer compositions provide oil and water repellency properties to substrates, in particular textile substrates, that approach the repellency properties that are generally associated with long chain alkyl group containing fluorochemicals, even at low application levels of the composition. In particular, it has been found that good to excellent repellency properties may be obtained when the weight average molecular weight of the polymer does not exceed 55000. The minimum molecular weight of the polymer to achieve good repellency properties depends on the nature of the medium used to dissolve or disperse the fluoropolymer.

It has further been found that the fluorochemical compounds of the present invention are compatible with and can be dissolved in a variety of solvents or solvent mixtures. The composition can be applied at the end of or after dry cleaning of a textile substrate in a dry cleaning application. Furthermore, the fluorochemical compositions provide good oil and water repellency properties to textiles treated therewith without the need for heat-curing, which makes them particularly useful for aerosol applications. In still a further aspect of the invention, the fluorochemical compounds can be applied from water based compositions.

### 4. Detailed description

The fluoropolymer compositions for use in the present invention comprise units derived from a fluorinated monomer and at least one non-fluorinated comonomer, and can be prepared by free-radical polymerization in the presence of a chain transfer agent. The fluorinated monomer is typically an ester of an α,β-ethylenically unsaturated carboxylic acid and contains a fluoroaliphatic group. The fluorinated monomer can be represented by the general formula

R_{f}-X-OC(O)-C(R)=CH₂ (I)

wherein R_{f} represents a perfluorinated aliphatic group having 3 or 4 carbon atoms, X is an organic divalent linking group and R represents hydrogen or a lower alkyl group having 1 to 4 carbon atoms.

The perfluorinated aliphatic group R_{f} is a perfluorinated, stable, inert, preferably saturated, non-polar, monovalent aliphatic radical containing 3 or 4 carbon atoms. It can be straight chain or branched chain. Especially suitable fluorinated monomers are those of which the R_{f}-group is of the formula C₄F₉-.

The linking group X links the perfluoroaliphatic group R_{f}to the free radical polymerizable group. Linking group X is generally non-fluorinated and preferably contains from 1 to about 20 carbon atoms. X can optionally contain oxygen, nitrogen, or sulfur-containing groups or a combination thereof, and X is free of functional groups that substantially interfere with free-radical polymerization (e.g., polymerizable olefinic double bonds, thiols, and other such functionality known to those skilled in the art). Examples of suitable linking groups X include straight chain, branched chain or cyclic alkylene, arylene, aralkylene, sulfonyl, sulfoxy, sulfonamido, carbonamido, carbonyloxy, urethanylene, ureylene, and combinations thereof such as sulfonamidoalkylene.

Specific examples of fluorinated monomers include:

CF₃CF₂CF₂CF₂CH₂CH₂OCOCR¹=CH₂

CF₃(CF₂)₃CH₂OCOCR¹=CH₂

CF₃(CF₂)₃SO₂N(CH₃)CH₂CH₂OCOCR¹=CH₂

CF₃(CF₂)₃SO₂N(C₂H₅)CH₂CH₂OCOCR¹=CH₂

CF₃(CF₂)₃SO₂N(CH₃)CH₂CH(CH₃)OCOCR¹=CH₂

(CF₃)₂CFCF₂SO₂N(CH₃)CH₂CH₂OCOCR¹=CH₂

wherein R¹ is hydrogen or methyl.

The fluorinated monomer or mixture thereof is typically used in amounts such that the amount of the corresponding units thereof in the polymer is between 20 and 80 mole %, preferably between 30 mole % and 80 mole %, more preferably between 40 mole % and 75 mole %.

The non-fluorinated comonomer is for example a hydrocarbon group containing monomer such as monomers that can be represented by formula :

Rₕ-L-Z (II)

wherein Rₕ represents a substituted or unsubstituted aliphatic group having 4 to 30 carbon atoms, L represents an organic divalent linking group and Z represents an ethylenically unsaturated group.
The hydrocarbon group is preferably selected from the group consisting of a linear, branched or cyclic alkyl group, an aralkyl group, an alkylaryl group and an aryl group which may or may not be substituted with substituents such as e.g. oxyalkylene groups, hydroxy groups, amino groups or halogens such as chlorine.

Examples of non-fluorinated comonomers include hydrocarbon esters of an α,β-ethylenically unsaturated carboxylic acid. Examples include n-butyl(meth)acrylate, isobutyl(meth)acrylate, octadecyl(meth)acrylate, lauryl(meth)acrylate, cyclohexyl (meth)acrylate, cyclodecyl (meth)acrylate, isobornyl (meth)acrylate, phenyl (meth)acrylate, benzyl (meth)acrylate, adamantyl (meth)acrylate, tolyl (meth)acrylate, 3,3-dimethylbutyl (meth)acrylate, (2,2-dimethyl-1-methyl)propyl (meth)acrylate, cyclopentyl (meth)acrylate, 2-ethylhexyl (meth)acrylate, t-butyl (meth)acrylate, cetyl (meth)acrylate, stearyl (meth)acrylate, behenyl (meth)acrylate, isooctyl (meth)acrylate, n-octyl (meth)acrylate, 4-ethyl-cyclohexyl (meth)acrylate, 2-ethoxyethyl methacrylate and tetrahydropyranyl acrylate. Further non-fluorinated comonomers include allyl esters such as allyl acetate and allyl heptanoate; alkyl vinyl ethers or alkyl allyl ethers such as cetyl vinyl ether, dodecylvinyl ether, ethylvinyl ether; unsaturated acids such as acrylic acid, methacrylic acid, alpha-chloro acrylic acid, crotonic acid, maleic acid, fumaric acid, itaconic acid and their anhydrides and their esters such as vinyl, allyl, methyl, butyl, isobutyl, hexyl, heptyl, 2-ethylhexyl, cyclohexyl, lauryl, stearyl, isobornyl or alkoxy ethyl acrylates and methacrylates; alpha-beta unsaturated nitriles such as acrylonitrile, methacrylonitrile, 2-chloroacrylonitrile, 2-cyanoethyl acrylate, alkyl cyanoacrylates; alpha,beta-unsaturated carboxylic acid derivatives such as allyl alcohol, allyl glycolate, acrylamide, methacrylamide, n-diisopropyl acrylamide, diacetoneacrylamide, aminoalkyl (meth)acrylates such as N,N-diethylaminoethylmethacrylate, N-t-butylaminoethylmethacrylate; alkyl(meth)acrylates having an ammonium group such as (meth)acrylates of the formula

X⁻ R₃N⁺-R^{a}-OC(O)-CR¹=CH₂

wherein X- represents an anion such as e.g. a chloride anion, R represents hydrogen or an alkyl group and each R may be the same of different, R^{a} represents an alkylene and R¹ represents hydrogen or methyl; styrene and its derivatives such as vinyltoluene, alpha-methylstyrene, alpha-cyanomethyl styrene; lower olefinic hydrocarbons which can contain halogen such as ethylene, propylene, isobutene, 3-chloro-1-isobutene, butadiene, isoprene, chloro and dichlorobutadiene and 2,5-dimethyl-1,5-hexadiene, hydrocarbon monomers comprising (poly)oxyalkylene groups including (meth)acrylates of a polyethylene glycol, (meth)acrylates of a block copolymer of ethylene oxide and propylene oxide, (meth)acrylates of amino- or diamino terminated polyethers and (meth)acrylates of methoxypolyethyleneglycols and hydrocarbon monomers comprising a hydroxyl group include hydroxylgroup containing (meth)acrylates, such as hydroxyethyl(meth)acrylate and hydroxypropyl(meth)acrylate. Further examples of non-fluorinated comonomers include chlorine containing comonomers such as vinylchloride and vinylidenechloride.

In a particular embodiment of the invention, the fluoropolymer includes units having one or more cure sites. These units will typically derive from corresponding comonomers that include one or more cure sites. By the term 'cure site' is meant a functional group that is capable of engaging in a reaction with the substrate to be treated. Examples of cure sites include acid groups such as carboxylic acid groups, hydroxy groups, amino groups and isocyanate groups or blocked isocyanate groups. Examples of comonomers from which a cure site unit may derive include (meth)acrylic acid, maleic acid, maleic anhydride, allyl methacrylate, hydroxybutyl vinyl ether, N-hydroxymethyl (meth)acrylamide, N-methoxymethyl acrylamide, N-butoxymethyl acrylamide, N-isobutoxymethyl acrylamide, glycidylmethacrylate and m. isopropenyl α,α dimethyl benzyl isocyanate. Other examples include polymerizable urethanes, that can be obtained by the reaction of a polymerizable mono-isocyanate with an isocyanate blocking agent or by the reaction of a di- or polyisocyanate and a hydroxy or amino-functionalized acrylate or methacrylate and an isocyanate blocking agent. Isocyanate blocking agents are compounds that upon reaction with an isocyanate group yield a group that is unreactive at room temperature with compounds that at room temperature normally react with an isocyanate but which group at elevated temperature reacts with isocyanate reactive compounds. Generally, at elevated temperature the blocking group will be released from the blocked (poly)isocyanate compound thereby generating the isocyanate group again which can then react with an isocyanate reactive group. Blocking agents and their mechanisms have been described in detail in "Blocked isocyanates III.: Part. A, Mechanisms and chemistry" by Douglas Wicks and Zeno W. Wicks Jr., Progress in Organic Coatings, 36 (1999), pp. 14-172.

The blocked isocyanate may be aromatic, aliphatic, cyclic or acyclic and is generally a blocked di- or triisocyanate or a mixture thereof and can be obtained by reacting an isocyanate with a blocking agent that has at least one functional group capable of reacting with an isocyanate group. Preferred blocked isocyanates are blocked polyisocyanates that at a temperature of less than 150°C are capable of reacting with an isocyanate reactive group, preferably through deblocking of the blocking agent at elevated temperature. Preferred blocking agents include arylalcohols such as phenols, lactams such as ε-caprolactam, δ-valerolactam, γ-butyrolactam, oximes such as formaldoxime, acetaldoxime, methyl ethyl ketone oxime, cyclohexanone oxime, acetophenone oxime, benzophenone oxime, 2-butanone oxime or diethyl glyoxime. Particular examples of comonomers having a blocked isocyanate group as the cure site include the reaction product of a di-isocyanate, 2-hydroxyethyl(meth)acrylate and 2-butanone oxime or the reaction product of a di-isocyanate, a mono(meth)acrylate of a polyethylene glycol and 2-butanone oxime and the reaction product of a triisocyanate, 1 equivalent of 2-hydroxyethyl(meth)acrylate and 2 equivalents of 2-butanone oxime and the reaction product of α,α-dimethyl m. isopropenyl benzyl isocyanate with 2-butanone oxime.

Preferred non-fluorinated comonomers that can be copolymerised with the fluorinated monomer include those selected from isobutyl (meth)acrylate, butyl (meth)acrylate, 2-ethylhexyl (meth)acrylate, 2-hydroxyethyl methacrylate, lauryl (meth)acrylate, methyl methacrylate, octadecyl(meth)acrylate, N-hydroxymethyl acrylamide, methoxy polyethyleneglycol methacrylate, and urethane (meth)acrylate type monomers as described above.

Non-fluorinated comonomers can be used in amounts such that the amount of the corresponding units in the polymer is between 20 mole % and 80 mole %, preferably between 20 mole % and 70 mole %. Comonomers having cure sites may be used in amounts such that the amount of the corresponding units in the polymer is up to 20 mole % preferably up to 7 mole %. Chlorine containing co-monomers such as in particular vinyl chloride and vinylidene chloride may be used as well although this is generally not preferred. Generally, the amount of vinyl chloride and/or vinylidene chloride should be low and should preferably be not more than 60 mole%, more preferably not more than 20 mole%. In particular, when the average molecular weight of the fluoropolymer is low, e.g. not more than 10000, the amount of vinyl chloride and/or vinylidene chloride should generally be not more than 5 mole % and preferably less than 3 mole %. Also, in compositions based on an alcoholic solvent such as isopropanol, the presence of units derived from vinyl chloride and/or vinylidene chloride in the polymer may substantially reduce the solubility of the fluoropolymer in such solvent.

The fluoropolymer used in the method of treating is typically prepared by free radical polymerisation in a solvent. Examples of suitable solvents include aliphatic and alicyclic hydrocarbons (e.g. hexane, heptane, cyclohexane), aromatic solvents (e.g. benzene, toluene, xylene), ethers (e.g. diethylether, glyme, diglyme, diispropylether), esters (e.g. acetone, methyl ethyl ketone, methyl isobutyl ketone), sulfoxides (e.g. dimethyl sulfoxide) and amides (e.g. N,N-dimethylformamide, N,N-dimethylacetamide). The reactants can be present in the solvent at any suitable concentration, e.g., from about 5 percent to about 90 percent by weight based on the total weight of the reaction mixture. The reaction mixture can be further diluted after polymerisation, with hydrocarbon solvents and optional co-solvents or with alcohols, with or without evaporation of the reaction solvent used.
Alternatively, the fluoropolymer can be prepared by emulsion polymerisation techniques. Various surfactants such as anionic, cationic, non-ionic or amphoteric surfactants may be employed. They can be used alone or in combination. Optional a polar co-solvent, such as e.g. acetone can be used, up to 20% by weight.
The polymerisation can be a thermal or photochemical polymerisation, carried out in the presence of a free radical initiator. Useful free radical initiators are known in the art and include azo compounds, such as azobisisobutyronitrile (AIBN), 2,2'-azo bis(2-methylbutyronitrile) (V-59), azobisvaleronitrile and azobis(2-cyanovaleric acid), 2,2'-azobis(2-amidinopropane)dihydrochloride and the like, hydroperoxides such as cumene, t-butyl, and t-amyl hydroperoxide, dialkyl peroxides such as di-t-butyl and dicumylperoxide, peroxyesters such as t-butylperbenzoate and di-t-butylperoxy phtalate, diacylperoxides such as benzoyl peroxide and lauroyl peroxide.

In order to obtain the desired molecular weight, the polymerisation is conveniently carried out in the presence of a chain transfer agent or a chain terminator. Suitable chain transfer agents or chain terminators include mercapto compounds such as alkylmercaptans. Specific examples include butyl mercaptan, n-octyl mercaptan, 2-mercapto ethyl ether, 2-mercapto imidazole, octadecyl-3-mercaptopropionate and trimethoxysilyl propanethiol. The latter chain transfer agent contains a silyl group and will thus result in the fluoropolymer containing silyl groups. In a particular embodiment of the invention, the fluoropolymer is free of silyl groups and accordingly, in such embodiment the chain transfer should not contain a silyl group. Fluorinated chain transfer agents such as a fluorinated mercapto compound can be used as well. Examples of fluorinated chain transfer agent include those of the formula:

(R_{f}¹)ₙ-Q-SH (III)

wherein R¹_{f} is a perfluorinated aliphatic group having 3 or 4 carbon atoms, n is 1 or 2, and
wherein Q is an organic linking group such as an organic linking group described for X in respect of formula (I) above.
Examples of compounds according for formula (III) include:

C₄F₉SO₂N(Me)CH₂CH₂OCOCH₂CH₂-SH, C₄F₉SO₂N(Me)CH₂CH₂SH

and

C₄F₉SO₂N(Me)CH₂CH₂OCOCH₂CH(SH)-COO-CH₂CH₂N(Me)O₂SC₄F₉.

The amount of the chain transfer agent used should be chosen so as to obtain the desired molecular weight of the polymer and will generally depend on the nature of the chain transfer agent and polymerization conditions used. The chain transfer agent will typically be used in an amount between 0.25 and 25 mole % based on the fluorinated and non-fluorinated monomers used. Typically, the fluorochemical copolymer of the present invention has a weight average molecular weight between 3000 and 55 000. The optimal molecular weight will generally depend on the intended application or nature of the composition used in the treatment of a substrate. For example, when the composition is an aqueous based composition, the weight average molecular weight should generally be between 10000 and 55000, preferably between 10000 and 50000. On the other hand, compositions that are based on an alcoholic solvent, in particular isopropanol preferably use a fluoropolymer that has a weight average molecular weight of 3000 to 8000. Compositions based on a hydrocarbon solvent and/or chlorinated solvent preferably comprise a fluoropolymer having a weight average molecular weight of about 6000 to 55000. By the term 'based on' here is meant that the particular solvent is the principal solvent in the composition, i.e. is present in an amount of at least 40% by weight based on the total weight of solvents in the composition. It will generally also be preferred that the molecular weight distribution (ratio of weight average molecular weight to number average molecular weight) is low, for example not more than 7, preferably not more than 5 and most preferably not more than 3. A typical range of the molecular weight distribution may be between 1.5 and 5.

The fluorochemical composition can be applied using conventional application methods and comprises compositions wherein the fluoropolymer is dissolved in an organic solvent or mixture of solvents. Thus, the fluoropolymer solution as obtained after the polymerization in a solvent as described above may be diluted with an organic solvent. Suitable organic solvents include hydrocarbon solvents, chlorinated solvents and alcohols. Suitable hydrocarbon solvents include isoparaffin, commercially available as ISANE™ IP-175 (Total Fina) or ISOPAR™L (Exxon). Solvent mixtures may be used as well. For example, the hydrocarbon solvent or chlorinated solvent may be mixed with a polar solvent, i.e. a solvent of higher polarity than the hydrocarbon solvent or chlorinated solvent. Examples of polar co-solvents include esters such as e.g. ethylacetate, ethyleneglycol monobutyl ether acetate (EGMBA), [2-(2-butoxyethoxy)ethyl acetate, dipropyleneglycol methyl ether acetate, propylene glycol methyl ether acetate, ethylhexyl acetate, ethers, such as e.g. dipropylene glycol dimethyl ether, dipropyleneglycol mono methyl ether, ketones, such as acetone, methylethylketone and methyl isobutylketone. Examples of suitable chlorinated solvents include perchloroethylene, tetrachloroethylene and trichloroethane. Examples of alcohols include ethanol, isopropylalcohol, methoxypropanol, t-butanol and dipropyleneglycol monomethylether.

The fluorochemical composition can also be used in the form of an aqueous emulsion or dispersion. An aqueous emulsion will generally contain water, an amount of fluorochemical composition effective to provide repellent properties to a substrate treated therewith, a surfactant in an amount effective to stabilize the emulsion and optionally a co-solvent, such as acetone. The surfactant is preferably present in an amount of about 1 to about 25 parts by weight, preferably about 2 to about 10 parts by weight, based on 100 parts by weight of the fluorochemical composition. Conventional cationic, anionic, non-ionic and zwitter ionic surfactants are suitable.
So as to improve the ability to disperse the fluoropolymer in water to form an aqueous emulsion or dispersion, the fluoropolymer may include repeating units derived from one or more monomers that comprise a water solubilizing group. Preferably such monomer is an acrylate or a methacrylate monomer having a water solubilizing group. The water solubilizing group can be ionic or non-ionic. Typical examples of water solubilizing groups that are non-ionic include poly(oxyalkylene) groups. An oxyalkylene unit in the poly(oxyalkylene) group preferably has 2 or 3 carbon atoms, such as -OCH₂-CH₂-, -OCH₂-CH₂-CH₂-, and -OCH(CH₃)CH₂-, the oxyalkylene units in the poly(oxyalkylene) group can be the same, as in poly(oxyethylene), or present as a mixture, as in straight or branched chain or randomly distributed oxyethylene and oxypropylene units or as in a straight or branched chain of blocks of oxyethylene units and blocks of oxypropylene units, as long as the poly(oxyalkylene)group remains water soluble or water dispersible. Particularly preferred poly(oxyalkylene) groups are polyoxyethylene and alkoxypolyoxyethylenes that have a molecular weight up to about 1500. Preferably, the number of oxyalkylene units in a poly(oxyalkylene) is between 2 and 120 and more preferably between 2 and 48. Ionic water solubilizing groups include anionic, cationic and zwitterionic groups. Specific examples of ionic water solubilizing groups include -OCH₂CH₂N⁺(CH₃)₃I⁻, -OCH₂CH₂N⁺(CH₃)₂CH₂CH₂CH₂SO₃⁻ and -OCH₂CH₂N⁺(CH₃)₃Cl⁻. Thus, in one embodiment, the fluoropolymer may comprise one or more units derived from an acrylate or methacrylate having a water solubilizing group as described above. When present however, the amount thereof should be kept low to avoid negatively affecting the water repellency properties that can be imparted by the fluorochemical composition to a substrate. Generally, the amount of units deriving from water solubilizing group containing monomers should not exceed 5 mole %, preferable not more than 3 mole% and most preferably not more than 1 mole%.

The fluorochemical composition may contain further additives such as buffering agent, agents to impart fire proofing or antistatic properties, fungicidal agents, optical bleaching agents, sequestering agents, mineral salts, plasticizers and swelling agents to promote penetration. It is particularly preferred to include one or more auxiliary components other than the fluoropolymer and that are capable of further improving the oil- and/or water repellency properties of a substrate treated with the fluorochemical composition. By 'further improving' is meant that the auxiliary component when added to the composition, increases at least one of the oil and water repellency properties relative to the composition without the addition of the auxiliary component. Preferably, the auxiliary components are capable of improving the durability of the repellency properties. The auxiliary components are generally non-fluorinated organic compounds and are also called extenders hereinafter. Suitable extenders capable of improving the oil- and/or water repellency properties include for example metallic esters or alcoholates, such as zirconium or titanium esters or alcoholates. Examples include zirconium butyrate, zirconium propylate, 2-ethylhexyl titanate and the like. Other extenders include blocked isocyanates including aromatic and aliphatic blocked isocyanates, aliphatic polyisocyanates and aromatic or aliphatic carbodiimides including aromatic or aliphatic polycarbodiimides. Further auxiliairy components include paraffine waxes such as carnauba wax and candilla wax, bees wax or waxes from animal sources. Examples of synthetic waxes include petroleum waxes such as paraffin waxes and microcrystalline or semicrystalline waxes and melamine-paraffin waxes. Commercial examples are Cerol EWL (Clariant), Freepel 1225 (BF Goodrich) . Other extenders include polyhydrogen methyl-siloxanes such as Perlite Si-SW from Bayer and L-31 from OSi Specialties or polysiloxanes such as Rotal Si-420 from Rotta.
The extender may be used in amounts between 2 and 300 parts by weight, preferably between 5 and 200 parts by weight, more preferably between 10 and 100 parts by weight per 100 parts fluoropolymer present in the treating composition. The fluorochemical treating composition will typically comprise from 0.01 % to 20 % by weight of fluoropolymer.

The amount of the treating composition applied to a substrate in accordance with this invention is chosen so that sufficiently high repellency properties are imparted to the substrate surface, said amount usually being such that 0.01 % to 10% by weight, preferably 0.05 % to 3.0 % by weight, more preferably 0.1 to 1.0 % by weight, based on the weight of the substrate, of fluorochemical composition is present on the treated substrate.

The substrates treated by the fluorochemical composition using the method of this invention are not especially limited but are typically fibrous substrates, such as textile, non-woven, carpet, leather. The fluorochemical composition is particularly useful for imparting repellency properties to textile substrates treated in dry cleaning application and for apparel, outerwear and rainwear articles. When the composition is applied in a dry cleaning application, the composition may be applied directly in the dry cleaning through the dry cleaning apparatus, e.g. in one of the last dry cleaning cycles. Compositions that comprise a solution of the fluoropolymer in a hydrocarbon solvent or chlorinated solvent optionally combined with a polar co-solvent are particularly useful for application during dry cleaning.

In order to affect treatment of a substrate, the substrate can be immersed in a diluted solvent composition or in an emulsion, comprising the fluorochemical polymer and optional additives. The saturated substrate can then be run through a padder/roller to remove excess composition, dried and cured in an oven at a temperature and for a time sufficient to provide a cured treated substrate. The drying process is typically carried out at room temperature or at temperatures between about 50°C and about 70°C. In general, a temperature of about 60°C for a time period of about 10 to 60 minutes, preferably 30 min is suitable. Curing of the treated substrates can be accomplished at temperatures between about 50°C and about 190°C, dependent on the particular substrate used. In general, a temperature of about 120°C to 170°C , in particular of about 130°C to about 150°C for a period of about 20 seconds to 10 minutes, preferably 2 to 5 minutes, is suitable. Alternatively the compositions are sprayed onto the substrates and subsequently dried at room temperature or elevated temperatures. The latter application method is typically used when the composition is applied by a consumer and is in such case conveniently contained in a spray can. Particularly suitable compositions for use in a spray application, e.g. spray can, include compositions in which the fluoropolymer is dissolved in an alcoholic solvent such as for example isopropanol.

The following examples further illustrate the invention without the intention of limiting the invention thereto.

### EXAMPLES

### Formulation and Treatment Procedure

### Pad application

Treatment baths were formulated containing a defined amount of the fluorochemical treatment agent. Treatments were applied to the test substrates by padding to provide a concentration of 0.3% solids (based on fabric weight and indicated as SOF (solids on fabric)). The treated fabrics were dried at 60°C for 30 minutes and ironed at 150°C during 15 seconds. The treated substrates were tested for their repellency properties.

### Spray application

Diluted fluoropolymer treating compositions, typically at 2% polymer solids, were sprayed on the substrate with an air-atomized spraygun (1 cross). On average,the substrates were sprayed so as to obtain about 5 g fluoropolymer solids per square meter. The treated substrates were air-dried overnight. Repellency properties were tested on the air-dried treated substrates.

Substrates used for the evaluation of treatments of this invention are all commercially available and are listed below:
PES/CO: Grey polyester/cotton 65/35, style No. 2681.4, obtained from Utexbel N.V., Ronse, Belgium
PAµ : Polyamide microfiber, style No. 7819.4, obtained from Sofinal, Belgium
PESµ : Polyester microfiber, style No. 6145.3, obtained from Sofinal, Belgium

Respective data of water and oil repellency shown in the following Examples and Comparative Examples are based on the following methods of measurement and evaluation criteria:

### Spray Rating (SR)

The spray rating of a treated substrate is a value indicative of the dynamic repellency of the treated substrate to water that impinges on the treated substrate. The repellency was measured by Standard Test Number 22, published in the 1985 Technical Manual and Yearbook of the American Association of Textile Chemists and Colorists (AATCC), and was expressed in terms of 'spray rating' of the tested substrate. The spray rating was obtained by spraying 250 ml water on the substrate from a height of 15 cm. The wetting pattern was visually rated using a 0 to 100 scale, where 0 meant complete wetting and 100 meant no wetting at all.

### Oil Repellency (OR)

The oil repellency of a treated substrate was measured by the American Association of Textile Chemists and Colorists (AATCC) Standard Test Method No. 118-1983, which test is based on the resistance of a treated substrate to penetration by oils of varying surface tensions. Treated substrates resistant only to Nujol® mineral oil (the least penetrating of the test oils) were given a rating of 1, whereas treated substrates resistant to heptane (the most penetrating of the test oils) were given a rating of 8. Other intermediate values were determined by use of other pure oils or mixtures of oils, as shown in the following table.

### Standard Test Liquids

| AATCC Oil Repellency Rating Number | Compositions |
|---|---|
| 1 | Nujol® |
| 2 | Nujol® /n-Hexadecane 65/35 |
| 3 | n-Hexadecane |
| 4 | n-Tetradecane |
| 5 | n-Dodecane |
| 6 | n-Decane |
| 7 | n-Octane |
| 8 | n-Heptane |

### Water repellency Test (WR)

The water repellency (WR) of a substrate was measured using a series of water-isopropyl alcohol test liquids and was expressed in terms of the "WR" rating of the treated substrate. The WR rating corresponded to the most penetrating test liquid that did not penetrate or wet the substrate surface after 15 seconds exposure. Substrates which were penetrated by or were resistant only to 100% water (0% isopropyl alcohol), the least penetrating test liquid, were given a rating of 0, whereas substrates resistant to 100% isopropyl alcohol (0% water), the most penetrating test liquid, were given a rating of 10. Other intermediate ratings were calculated by dividing the percent isopropyl alcohol in the test liquid by 10, e.g., a treated substrate resistant to a 70%/30% isopropyl alcohol/water blend, but not to an 80%/20% blend, would be given a rating of 7.

### Determination of Molecular weight

The average molecular weight and polydispersity of a sample was determined by Gel Permeation Chromatography (GPC) analysis. 15 mg of a sample was dissolved in 3 mL of tetrahydrofuran (THF) to form a mixture. The mixture was filtered using a 0.45 micron polytetrafluoroethylene (PTFE) syringe filter. Then about 150 microliters (µL) of the filtered solution was injected into a P1 gel-Mixed B column (3 columns, 300 mm x 7.5 mm), available from Polymer Laboratories Ltd, UK) that was part of a GPC system also having a Waters 717 Autosampler and a Waters 600 Pump. The system operated at 40°C, with a THF eluent that moved at a flow rate of approximately 1.0 mL/min. A Waters 410 Refractive Index Detector was used to detect changes in concentration. Number and weight average molecular weight (Mₙ and M_{w} respectively) and polydispersity (Mw/Mn) calculations were based on a calibration mode that used narrow polydispersity polystyrene controls ranging in molecular weight from 1000 to 7.3×10⁶. The actual calculations were made with Millennium software available from Waters.

### Abbreviations

ISANE™ IP-175 : Isoparaffin, available from Total Fina
EGMBA : ethyleneglycol monobutyl ether acetate
MeFBSE(M)A: N- methyl perfluoro-butyl sulfonamidoethyl (meth)acrylate
MeFOSE(M)A : N-methyl perfluoro-octyl sulfonamidoethyl (meth)acrylate
ODMA: octadecyl methacrylate
FC: fluorochemical
VCl₂ : vinylidenechloride
MPEG350MA : methoxy polyethylene glycol methacrylate (Mw 350), available from BP Chemicals
Tergitol™ 15-S-30 : non ionic surfactant, commercially available from DOW
Tergitol™ TMN-6 : non-ionic surfactant, commercially available from DOW
Ethoquad™ C-12 : quaternary ammonium emulsifier, commercially available from Akzo Nobel
V-50 : 2,2'-azobis(2-amidinopropane)dihydrochloride, available from Wako
V-59 : 2,2'azobis (2-methyl-butyronitrile) obtained from Wako
IPA : isopropylalcohol
FC-mercaptan : C₄F₉SO₂N(Me)CH₂CH₂OCOCH₂CH₂-SH, prepared by esterification of MeFBSE with 3-mercapto propionic acid
n-OctSH : n-octyl mercaptan
MeFBSE : N- methyl perfluoro-butyl sulfonamidoethyl alcohol
Tyzor TiOT : titanium tetra-isooctanolate, available from Du Pont de Nemours
Tyzor TPT : titanium tetra-isopropanolate, available from Du Pont de Nemours
Tyzor NBZ : zirconium tetra-butanolate, available from Du Pont de Nemours
DOA: dioctyladipate
DCC : 1,3 dicyclo hexyl carbodiimide, available from Aldrich
L-31 : polymethyl hydrogen siloxane, available from OSi Specialties
mTMI : meta isopropenyl α,α-dimethyl benzyl isocyanate, available from Dyno Cyanamid

### Synthesis of fluoropolymers FC-1 to FC-9 and comparative fluoropolymer C-FC-1 and C-FC-2

Fluoropolymers FC-1 to FC-9 and comparative fluoropolymers C-FC-1 and C-FC-2, as given in table 1, were made according to the procedure as described for the synthesis of MeFBSEMA/ODMA (73.3/26.7) with 6.5 mole % (5.95 phr) octadecyl-3-mercaptopropionate (FC-7):

A 500 ml glass bottle, equipped with a condenser, a temperature control and a dry N₂ inlet, was charged with 77.5 g MeFBSEMA (0.182 moles) followed by 22.5 g ODMA (0.066 moles) and 5.95 g (0.017 moles) octadecyl-3-mercaptopropionate. 70.6 g EGMBA was added and the reaction mixture was degassed 3 times under vacuum with dry N₂. V-59 catalyst was added (2% on solids) and the reaction temperature was increased to 75°C. The reaction was run for 20 hours under dry N₂. After cooling to 30°C, additionally 0.25% V-59 were added and the reaction mixture was heated to 75°C. The reaction was continued for 3 to 4 hours. The reaction mixture was cooled to 25°C and 3.54 g EGMBA and 173.05 g ISANE™ IP-175 were added. The mixture was stirred until it was homogeneous. Treatment solutions were prepared by diluting 14 g of the above prepared mixture with 1000 g ISANE™ IP-175.
The fluorochemical polymers were evaluated for their number and weight average molecular weight using GPC analysis. The results are given in table 4.

**Table 1**

| Composition of fluorochemical polymers (Mole %) | | | | | |
|---|---|---|---|---|---|
| | MeFBSEMA | ODMA | MeFOSEMA | Octadecyl-3-mercaptopropionate* | Trimethoxysilyl propanethiol* |
| FC-1 | 65 | 35 | / | 4.76 | / |
| FC-2 | 67.7 | 32.3 | / | 4.76 | / |
| FC-3 | 70.5 | 29.5 | / | 4.76 | / |
| FC-4 | 73.3 | 26.7 | / | 2.38 | / |
| FC-5 | 73.3 | 26.7 | / | 3.57 | / |
| FC-6 | 73.3 | 26.7 | / | 4.76 | / |
| FC-7 | 73.3 | 26.7 | / | 5.95 | / |
| FC-9 | 73.3 | 26.7 | / | / | 3.36 |
| C-FC-1 | 73.3 | 26.7 | / | 1.19 | / |
| C-FC-2 | / | 49.7 | 50.3 | / | / |

| | | | | | |
|---|---|---|---|---|---|
| Note : * chain transfer expressed in parts per hundred (phr) monomer mixture (weight) | | | | | |

### Synthesis of fluoropolymers FC-10 to FC-15 and comparative fluoropolymers C-CF-3 to C-FC-4

Fluoropolymers FC-10 to FC-13 and comparative fluoropolymers C-CF-3 to C-CF-4 as given in table 2, were prepared essentially according to the procedure as is given for the synthesis of fluoropolymer FC-10 : MeFBSEMA/VCl₂/ODMA/MPEG350MA (23.4/57.1/19.0/0.51)

A 250 ml glass bottle was charged with 18 g MeFBSEA, 11.6 g ODMA, 0.4 g MPEG350MA, 80.6 g water and 19.8 g acetone. A mixture of 2% (% emulsifier solids, based on monomer solids) Ethoquad™ C/12, 2% Tergitol™ 15-S-30 and 3.6% Tergitol™ TMN-6 was added as emulsifier system. After 0.2 g V-50 initiator (0.5 % on solids) was added, the bottle was deaerated and purged with nitrogen. 10 g VCl₂ was added and a quick stream of nitrogen was passed over the reaction mixture. The bottle was sealed and was put in a Launder-O-meter (AATCC Standard Instrument available from Atlas) at a temperature of 72°C, during 16 hours. After polymerization, acetone was occasionally removed under reduced pressure, to obtain a 33% solids emulsion. The fluoropolymers were evaluated for their molecular weight. The results are given in table 4. The fluoropolymer emulsion was then used to treat substrates by pad application as outlined above, at a typical bath concentration to obtain 0.3 % SOF after padding.

Fluoropolymers FC-14 and FC-15 were made essentially according to the same procedure, but using different amounts of emulsifiers : 2% (based on solids) Ethoquad™ C/12, 3% Tergitol™ 15-S-30 and 5.4% Tergitol™ TMN-6.

**Table 2**

| Composition of fluorochemical polymers (mole %) | | | | | |
|---|---|---|---|---|---|
| | MeFBSEMA | ODMA | VCl₂ | MPEG350MA | n-OctSH* |
| FC-10 | 23.4 | 19.0 | 57.1 | 0.51 | 0.25 |
| FC-11 | 23.4 | 19.0 | 57.1 | 0.51 | 0.5 |
| FC-12 | 23.4 | 19.0 | 57.1 | 0.51 | 1 |
| FC-13 | 23.4 | 19.0 | 57.1 | 0.51 | 2 |
| FC-14 | 23.4 | 19.6 | 57.0 | / | 0.5 |
| FC-15 | 76.1 | 23.9 | / | / | 0.5 |
| C-CF-3 | 23.4 | 19.0 | 57.1 | 0.51 | / |
| C-FC-4 | 23.4 | 19.6 | 57.0 | / | / |

| | | | | | |
|---|---|---|---|---|---|
| Note : * : parts per hundred parts monomer (weight) | | | | | |

### Synthesis of fluoropolymers FC-16 to FC-19

Fluoropolymers FC-16 to FC-19, as given in table 3, were prepared according to the following general procedure :
The fluoropolymers were made at 40% solids in ethylacetate. The monomers, chain transfer agent and ethylacetate were charged into a polymerisation bottle, degassed and reacted under nitrogen atmosphere at 65°C in the presence of 1% (on solids) V-59 initiator. The reaction was run for 16 hours. Then additionally 1% V-59 initiator was added and the reaction was run for another 6 hours at 65°C. The fluoropolymers were evaluated for their solubility in isopropylalcohol as follows : 1% fluoropolymer solutions were prepared in IPA, starting from the concentrated mixture prepared above. Clear solutions were obtained.

**Table 3**

| Composition of fluoropolymers | | | | | | |
|---|---|---|---|---|---|---|
| | MeFBSEA | MeFBSEMA | ODMA | mTMI | n-OctSH* | FC-mercaptan* |
| FC-16 | / | 55.5 | 44.5 | / | : | 11.1 |
| FC-17 | 76.7 | / | 23.3 | / | 4 | / |
| FC-18 | 76.7 | / | 23.3 | / | / | 12 |
| FC-19 | 75.5 | / | 20.6 | 3.9 | / | 12 |

| | | | | | | |
|---|---|---|---|---|---|---|
| Note : * : parts by weigth per 100 parts monomers | | | | | | |

**Table 4**

| GPC analysis of fluoropolymers | | | |
|---|---|---|---|
| FC | Mn | Mw | Mw/Mn |
| FC-1 | 4928 | 12209 | 2.48 |
| FC-2 | 4736 | 11851 | 2.50 |
| FC-3 | 4624 | 11425 | 2.47 |
| FC-4 | 7484 | 20789 | 2.78 |
| FC-5 | 5775 | 15375 | 2.72 |
| FC-6** | 5358 | 14047 | 2.62 |
| FC-7 | 4218 | 9586 | 2.27 |
| FC-9** | 7770 | 19242 | 2.48 |
| FC-10 | 15601 | 50455 | 3.23 |
| FC-11 | 11388 | 31917 | 2.8 |
| FC-12 | 9639 | 20525 | 2.13 |
| FC-13 | 7169 | 13526 | 1.89 |
| FC-16 | 4032 | 7274 | 1.8 |
| FC-17 | 3350 | 4870 | 1.45 |
| FC-18 | 3994 | 5992 | 1.5 |
| FC-19 | 3764 | 5630 | 1.5 |
| C-FC-1 | 13676 | 107638 | 7.87 |
| C-FC-3 | 14693 | 89179 | 6.07 |

| | | | |
|---|---|---|---|
| Note : ** : mean values of 5 measurements | | | |

### Examples 1 to 4 and comparative examples C-1 and C-2

In examples 1 to 4 several substrates, as given in table 5, were treated with ISANE™ IP-176 solutions of fluorochemical copolymers FC-4 to FC-7 by pad application, so as to give an add-on level of 0.3% SOF. Comparative examples C-1 and C-2 were made by treating the substrates with comparative fluoropolymers C-FC-1 and C-FC-2. The treated substrates were dried at 60°C for 30 min and ironed at 150°C during 15 sec. The results of OR and SR are given in table 5.

**Table 5**

| substrates treated with MeFBSEMA/ODMAcopolymers | | | | | | | |
|---|---|---|---|---|---|---|---|
| Performance | Substrate | Ex 1 (FC-4) | Ex 2 (FC-5) | Ex 3 (FC-6) | Ex 4 (FC-7) | C-1 (C-CF-1) | C-2 (C-FC-2) |
| OR | PES/CO | 2 | 2 | 3 | 4 | 0 | 4 |
| | PAµ | 2 | 2 | 3 | 3.5 | 1 | 5 |
| | PES | 2 | 2 | 2.5 | 3 | 0 | 4 |
| SR | PES/CO | 90 | 80 | 80 | 80 | 80 | 100 |
| | PAµ | 80 | 100 | 80 | 80 | 80 | 100 |
| | PES | 95 | 95 | 95 | 95 | 80 | 100 |

The results indicated that the treated substrates had good oil and water repellency ratings which may be acceptable for at least some applications. From a comparison of C-1 with Ex 1 to 4 it can be seen that the oil repellency could be increased by lowering the molecular weight of the fluoropolymer.

### Examples 5 to 8

In examples 5 to 8 substrates were treated with ISANE™ IP-175 solutions of fluoropolymers as given in table 6, by pad application to give 0.3% SOF. Comparative example C-3 was made with a long chain fluoro alkyl acrylate polymer. After treatment, the substrates were dried at 60°C for 30 min and ironed at 150°C during 15 sec. The repellency properties are recorded in table 6.

**Table 6**

| Repellency properties of substrates treated with MeFBSEMA/ODMA copolymers | | | | | | |
|---|---|---|---|---|---|---|
| Performance | Substrate | Ex 5 (FC-1) | Ex 6 (FC-2) | Ex 7 (FC-3) | Ex 8 (FC-6) | C-3 (C-CF-2) |
| OR | PES/CO | 3 | 4 | 4 | 4 | 4 |
| | PAµ | 3 | 3 | 4 | 4 | 5 |
| | PES | 3 | 3 | 3 | 3 | 4 |
| SR | PES/CO | 85 | 85 | 85 | 100 | 100 |
| | PAµ | 80 | 75 | 85 | 90 | 100 |
| | PES | 80 | 80 | 90 | 90 | 100 |

As can be seen from the results, good overall performance levels were obtained for substrates treated with MeFBSEMA/ODMA copolymers in a monomer range from 70/30 to 77.5/22.5, with an optimum in performance for MeFBSEMA/ODMA monomer ranges 75/25 and 77.5/22.5. Surprisingly, substrates treated with low molecular weight short chain fluoroalkyl (meth)acrylate copolymers performed in the same range as substrates treated with high molecular weight long chain fluoroalkyl acrylate copolymers.

### Examples 9 to 12

In examples 9 to 12 several substrates were treated by pad application (0.3% SOF) with an ISANE™ IP-175 solution of fluorochemical copolymers FC-6 and FC-7 and different levels of ethyl hexyl titanate (% based on FC solids) as is given in table 7. The treated substrates were tested for their oil and water repellency. The results are given in table 7.

**Table 7:**

| substrates treated with fluorochemical copolymers and titanate extender | | | | | |
|---|---|---|---|---|---|
| Performance | Substrate | Ex 9 | Ex 10 | Ex 11 | Ex 12 |
| FC | | FC-6 | FC-6 | FC-7 | FC-7 |
| % extender | | 25 | 35 | 25 | 35 |
| OR | PES/CO | 3 | 3 | 3.5 | 3 |
| | PAµ | 2.5 | 3 | 3.5 | 3.5 |
| | PES | 2 | 2 | 2 | 2 |
| SR | PES/CO | 85 | 90 | 90 | 90 |
| | PAµ | 85 | 90 | 85 | 85 |
| | PES | 100 | 100 | 100 | 100 |

The results indicated that the oil and dynamic water repellency properties of substrates treated with fluorochemical copolymers could be improved by the use of a hydrocarbon extender. High dynamic water repellency could be obtained.

### Examples 13 and 14

In examples 13 and 14, the same kind of experiments was repeated with ISANE™ IP-175 solutions of fluorochemical FC-6 and FC-7 respectively in combination with 35% Zr alkanoate (based on FC solids). The repellency results are given in table 8.

**Table 8:**

| substrates treated with fluorochemical copolymers and Zr alkanoate extender | | | |
|---|---|---|---|
| Performance | Substrate | Ex 13 | Ex 14 |
| FC | | FC-6 | FC-7 |
| OR | PES/CO | 2 | 2 |
| | PAµ | 2 | 2 |
| | PES | 1 | 1 |
| SR | PES/CO | 100 | 100 |
| | PAµ | 85 | 90 |
| | PES | 100 | 100 |

The results indicated that substrates having high dynamic water repellency could be made when they were treated with a mixture of fluorochemical copolymers and Zr alkanoate.

### Example 15

In example 15 different substrates as given in table 9 were treated by pad application with ISANE™ IP-175 mixtures of FC-9 with 35% (based on FC solids) of ethyl hexyl titanate. The substrates were dried at 60°C during 30 minutes and ironed at 150°C during 15 sec. The results of repellency are given in table 9.

**Table 9:**

| substrates treated with fluorochemical copolymes and titanate extender | | |
|---|---|---|
| Performance | Substrate | Ex 15 (FC-9) |
| OR | PES/CO | 2 |
| | PAµ | 2 |
| | PES | 1.5 |
| SR | PES/CO | 90 |
| | PAµ | 85 |
| | PES | 100 |

The results indicated that good performance results could be obtained.

### Examples 16 to 19 and comparative example C-4

In examples 16 to 19, PES and PA substrates were treated by pad application with aqueous fluorochemical compositions FC-10 to FC-13, so as to obtain 0.3% SOF. Comparative example C-4 was made with the comparative fluorochemical emulsion C-FC-3. The treated fabrics were dried and cured at 160°C for 1.5 minutes and tested for their oil and water repellency properties. The results are given in table 10.

**Table 10:**

| Performance results of substrates treated with aqueous fluorochemical copolymers | | | | | | |
|---|---|---|---|---|---|---|
| Performance | Substrate | Ex 16 (FC-10) | Ex 17 (FC-11) | Ex 18 (FC-12) | Ex 19 (FC-13) | C-4 (C-FC-3) |
| OR | PES | 1 | 2 | 2 | 2 | 0 |
| | PA | 2 | 3 | 2 | 1 | 1 |
| WR | PES | 2 | 3 | 3 | 3 | 2 |
| | PA | 3 | 3 | 3 | 3 | 3 |
| SR | PES | 100 | 100 | 90 | 80 | 100 |
| | PA | 90 | 100 | 85 | 85 | 85 |

The results in the table indicate that the oil repelleny of the substrates treated with fluorochemical copolymers, made with chain transfer agent was increased.

### Examples 20 to 22

In examples 20 to 22 different substrates, as given in table 12 were sprayed with 2% IPA solutions of fluorochemical copolymers FC-17 to FC-19. The substrates were dried at room temperature overnight and tested for their repellency properties. The results are given in table 11.

**Table 11**

| Substrates treated with fluoropolymer compositions : air dry | | | | |
|---|---|---|---|---|
| Performance | Substrate | Ex 20 (FC-17) | Ex 21 (FC-18) | Ex 22 (FC-19) |
| OR | PES/CO | 2 | 2 | 2 |
| | PAµ | 2 | 2 | 2 |
| | PES | 2 | 3 | 3 |
| WR | PES/CO | 7 | 5 | 9 |
| | PAµ | 7 | 7 | 7 |
| | PES | 5 | 7 | 7 |
| SR | PES/CO | 70 | 70 | 75 |
| | PAµ | 80 | 90 | 80 |
| | PES | 70 | 100 | 85 |

The results indicate that substrates treated with fluoropolymers of the invention have good overall repellency properties, even under air-dry conditions.

### Examples 23 to 29

In examples 23 to 28, 5 g fluoropolymer concentrate FC-18 was blended with 0.5 g hydrocarbon extender or plasticizer as given in table 13, 0.8 g ethylacetate and 93.8 g IPA. Example 29 was made with fluoropolymer FC-18, without additives. The compositions were used to treat various substrates by spray application. The treated substrates were dried at room temperature overnight and tested for their repellency properties. The results are given in table 12.

**Table 12**

| substrates treated with fluoropolymer compositions and extenders/plasticizer : air-dry conditions | | | | | | | | |
|---|---|---|---|---|---|---|---|---|
| Substrate | Performance | Ex 23 | Ex 24 | Ex 25 | Ex 26 | Ex 27 | Ex 28 | Ex 29 |
| Additive | | DOA | Tyzor TiOT | Tyzor TPT | Tyzor NBZ | DCC | L-31 | / |
| PES | OR | 5 | 4 | 3 | 5 | 4 | 1 | 3 |
| | WR | 1 | 7 | 8 | 8 | 8 | 7 | 7 |
| | SR | 70 | 100 | 100 | 100 | 80 | 100 | 80 |
| PES/CO | OR | 3 | 2 | 3 | 2 | 3 | 1 | 2 |
| | WR | 3.5 | 5 | 7 | 8 | 4 | 2 | 3.5 |
| | SR | 70 | 85 | 90 | 80 | 75 | 70 | 70 |
| PAµ | OR | 2 | 2 | 1.5 | 1.5 | 2 | 1.5 | 2 |
| | WR | 6 | 7 | 7 | 8 | 7 | 6 | 7 |
| | SR | 75 | 85 | 85 | 90 | 90 | 90 | 80 |

As can be seen from the results in the table, addition of extenders such as titanate, zirconate, polycarbodiimide or silicones can boost the static (WR) and dynamic (SR) water repellency especially on PES and PES/CO. The addition of plasticizer DOA has a positive effect on the oil repellency.

## Claims

1. Fluoropolymer comprising repeating units derived from (i) one or more fluorinated monomers selected from the group consisting of monomers according to the general formula:
R_{f}-X-OC(O)-C(R)=CH₂
wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers, said fluoropolymer being free of silyl groups and said fluoropolymer having a weight average molecular weight between 3000 and 55000, with the proviso that when said fluoropolymer comprises between 3 and 75 mole % of repeating units derived from a chlorine containing comonomer selected from the group consisting of vinylidene chloride, vinyl chloride and mixtures thereof, the fluoropolymer has a weight average molecular weight of at least 6000.

2. Fluoropolymer according to claim 1 wherein said fluoropolymer comprises between 20 and 80 mole% based on the total amount of repeating units in the fluoropolymer, of repeating units derived from said fluorinated monomers.

3. Fluoropolymer according to claim 1 wherein said at least one of said non-fluorinated comonomers is a hydrocarbon comonomer of the formula:
Rₕ-L-Z
wherein Rₕ represents an aliphatic group having 4 to 30 carbon atoms, L represents an organic divalent linking group and Z represents an ethylenically unsaturated group.

4. Fluoropolymer according to claim 1 wherein said fluoropolymer comprises one or more cure sites.

5. Fluoropolymer according to claim 3 wherein said fluoropolymer comprises repeating units derived from said hydrocarbon comonomer in an amount between 20 and 80 mole % based on the total amount of repeating units in the fluoropolymer.

6. Fluoropolymer according to claim 1 further comprising end groups derived from a chain transfer agent.

7. Fluoropolymer composition comprising a solution in an organic solvent of a fluoropolymer comprising units derived from (i) one or more fluorinated monomers selected from the group consisting of monomers according to the general formula:
R_{f}-X-OC(O)-C(R)=CH₂
wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers and wherein said fluoropolymer has a weight average molecular weight between 3000 and 55000, and wherein said organic solvent comprises at least one solvent selected from the group consisting of hydrocarbon solvents, chlorinated solvents and alcohols.

8. Fluoropolymer composition according to claim 7 wherein said composition comprises a mixture of a hydrocarbon solvent and a polar co-solvent.

9. Fluoropolymer composition according to claim 7 wherein said fluoropolymer has a weight average molecular weight of at least 6000.

10. Fluoropolymer composition according to claim 7 wherein said composition further comprises an extender selected from the group consisting of zirconium esters, titanium esters, silicones and carbodiimides.

11. Fluoropolymer composition according to claim 7 wherein said organic solvent comprises an alcohol and wherein the fluoropolymer has a weight average molecular weight of 3000 to 8000.

12. Fluoropolymer composition according to claim 7 wherein the composition comprises a hydrocarbon solvent or a chlorinated solvent and wherein the fluoropolymer has a molecular weight of at least 6000.

13. Fluoropolymer composition comprising an aqueous emulsion or dispersion of a fluoropolymer comprising units derived from (i) one or more fluorinated monomers selected from the group consisting of monomers according to the general formula:
R_{f}-X-OC(O)-C(R)=CH₂
wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers and wherein said fluoropolymer has a weight average molecular weight between 10000 and 55000.

14. Fluoropolymer composition according to claim 13 wherein said fluoropolymer further comprises end groups derived from a chain transfer agent.

15. Method of treatment comprising contacting a substrate with a fluoropolymer composition as defined in any of claims 7 to 14.

16. Method according to claim 15 wherein said substrate comprise a fibrous substrate.

17. Method for preparing a fluoropolymer as claimed in claim 1, comprising a free radical polymerization of (i) one or more fluorinated monomers selected from the group consisting of monomers according to the general formula:
R_{f}-X-OC(O)-C(R)=CH₂
wherein R_{f} represents a perfluorinated aliphatic group having 3 or 4 carbon atoms, X is an organic divalent linking group and R represents hydrogen or a lower alkyl group having 1 to 4 carbon atoms; and (ii) one or more non-fluorinated comonomers.

18. Method according to claim 17 wherein said polymerization is an emulsion polymerization or a solution polymerization in an organic solvent.

19. Method according to claim 18 wherein said polymerization is carried out in the presence of a chain transfer agent.

20. Method according to claim 19 wherein said chain transfer agent comprises a mercapto compound.
